# EUROPÄISCHE PATENTANMELDUNG

(11) **EP 4 708 596 A1**
(43) Veröffentlichungstag der Anmeldung: **11.03.2026**
(21) Anmeldenummer: 25193850.2
(22) Anmeldetag: 04.08.2025
(51) Int. Cl.: H02G 3/00, E04B 2/76, F16B 7/04, F16B 9/00

(54) **HALTER MIT EINEM DARAN ANGESCHLOSSENEN ANSCHLUSSADAPTER SOWIE BEFESTIGUNGSANORDNUNG MIT EINEM SOLCHEN HALTER**

(30) Priorität: 27.08.2024 DE 202024104825 U
(71) Anmelder: OBO Bettermann Hungary Kft, 2347 Bugyi (HU)
(72) Erfinder: KORTE, Thomas, 58708 Menden (DE); SCHMIDT, Michael, 58730 Fröndenberg/Ruhr (DE)
(74) Vertreter: Haverkamp Patentanwälte PartG mbB

(57) **Zusammenfassung**

Die Erfindung betrifft einen Halter mit einem daran angeschlossenen, als Positivstruktur ausgeführten und von dem Halter 2 abragenden Anschlussadapter 5, wobei der Anschlussadapter 5 als Profil eine Vorderwand 11, zwei seitlich daran angeformte Seitenwände 18, 18.1 und wenigstens ein der Vorderwand 11 gegenüberliegendes, an dem an einem Stützwiderlager einer Adapteraufnahme 22 eines an den Anschlussadapter 5 anzuschließenden Anschlussabschnittes 26 einer Kabeltragkomponente abstützbares Stützelement 13 aufweist und über ein Riegelglied 6 verfügt, das die Vorderwand 11 des Anschlussadapters 5 durchgreift und mit einem Riegel 25 in die Riegelfalle der Adapteraufnahme 22 eingreift, welches Riegelglied gegen die Rückstellkraft zumindest eines Federelementes zum Ineingriffstellen seines Riegels 25 mit der Riegelfalle der Adapteraufnahme 22 verstellbar ist.

Beschrieben ist ferner eine Befestigungsanordnung mit einem solchen Halter 2 und einer profilierten Kabeltragkomponente 3.

## Beschreibung

Gegenstand der Erfindung ist ein Halter mit einem daran angeformten Anschlussadapter. Gegenstand der Erfindung ist ferner eine Befestigungsanordnung mit einem solchen Halter.

Derartige Halter bzw. Befestigungsanordnungen mit einem solchen Halter werden beispielsweise bei der Verlegung bzw. Montage von Komponenten eines Kabeltragsystems zur Befestigung von zwei Kabeltragkomponenten miteinander eingesetzt. Als Halter einer solchen Befestigungsanordnung dient in einem solchen Fall beispielswese ein Kopfstück bzw. eine Kopfplatte, an die als Kabeltragkomponente ein Hängestiel angeschlossen ist. Die Kopfplatte bzw. das Kopfstück wird an der Unterseite einer Decke festgelegt. An diesen angeschlossen ist ein Hängestiel, an den weitere Kabeltragkomponenten angeschlossen sind bzw. werden, wie beispielsweise Ausleger zum Tragen einer Kabelrinne oder eines Kabelkanals.

Aus EP 0 712 191 A1 ist eine Befestigungsanordnung bekannt, bei der ein erstes Profilstück deckenseitig befestigt ist. An dieses Profilstück ist ein zweites Profilteil angeschlossen. Dieses ist nach Art eines Hohlkammerprofils ausgeführt und dergestalt dimensioniert, dass in dessen Hohlraum ein Hängestiel eingeschoben werden kann. Der Hängestiel ist mit dem zweiten Profilteil mittels Schraubverbindern verbunden.

Eine weitere Befestigungsanordnung ist aus WO 2021/254921 A2 bekannt. Diese Befestigungsanordnung verfügt über eine Kopfplatte mit einer durch zwei Seitenwände eingefassten Aufnahme zum Einschieben eines Hängestiels. Der in die Aufnahme eingeschobene Hängestiel wird mittels Schraubbefestigern an der Kopfplatte befestigt.

Eine solche Befestigungsanordnung mit einem Kopfstück und einem Hängestiel ist beispielsweise aus EP 4 131 682 A1 bekannt. Bei dieser Befestigungsanordnung ist das Kopfstück ein im Querschnitt U-förmiges Stanzbiegeteil, dessen einander gegenüberliegende Seitenwangen eine Stielaufnahme zum Einsetzen des oberen Abschnittes eines Hängestiels einfassen. Von den Seitenwangen ragen nach innen ausgestellte Haltelaschen ab, und zwar in einem vertikalen Abstand, der dem Abstand des Lochrasters eines Hängestiels entspricht. Unter Ausnutzung der Möglichkeit einer elastischen Verstellung der Seitenwangen kann die Stielaufnahme durch Einschieben des Endanschnittes des Hängestiels aufgeweitet werden, sodass die Haltelaschen in jeweils eine Durchbrechung des Lochrasters einspringen. Dann ist der Hängestiel an den Haltelaschen des Kopfstückes aufgehängt. Zusätzliche Führungslaschen, die nach innen ausgestellt von den Seitenwangen abragen, dienen einer Führung des einzuschiebenden Endabschnittes eines Hängestiels, damit die nach innen ausgestellten Haltelaschen in Einschieberichtung des Hängestiels mit dem Lochraster desselben fluchten.

Eine weitere Befestigungsanordnung dieser Art ist aus EP 1 589 626 A1 bekannt. Das Kopfstück dieser vorbekannten Befestigungsanordnung ist ebenfalls ein Stanzbiegeteil, durch welches im Unterschied zu der aus EP 4 131 682 A1 bekannt gewordenen Befestigungseinrichtung eine umfänglich geschlossene Aufnahme für den Hängestiel bereitgestellt ist. Bei dieser Befestigungsanordnung befinden sich nur an einer Seitenwand nach innen ausgestellte Haltelaschen. Eine ähnliche Ausgestaltung wie in EP 1 589 626 A1 offenbart, ist auch in EP 0 732 788 A1 beschrieben. Auch bei dieser vorbekannten Befestigungsanordnung ist an jede Seitenwand des Hängestiels oberseitig ein nach außen hin abgewinkelter Abschnitt zur deckenseitigen Befestigung des Hängestiels vorgesehen.

EP 1 471 616 A1 offenbart einen als zumindest weitgehend geschlossenes Profil ausgebildeten Hängestiel, hergestellt als Stanzbiegeteil. Zwei einander gegenüberliegende Seitenwände tragen oberseitig nach außen abgekantete Befestigungslaschen mit Befestigeröffnungen zum Anschließen des Hängestiels an eine Decke.

Bei dieser Befestigungsanordnung hängt der Hängestiel an den nach innen ausgestellten Haltelaschen des Kopfstückes. Die jeweilige Stielaufnahme des Kopfstückes bildet somit zur Aufnahme des oberen Endes des Hängestiels eine Negativstruktur. Der in das Kopfstück eingeschobene stirnseitige Abschluss des Hängestiels ist von der Unterseite der Befestigungsplatte des Kopfstückes beabstandet. Auch wenn eine solche Befestigungsanordnung für viele Lastfälle ausreichend ist, genügt diese insbesondere höheren, an eine solche Befestigungsanordnung gestellten Ansprüchen an die Traglast nicht immer. Nicht unproblematisch ist beim Gegenstand der EP 1 589 626 A1, dass die Befestigungsanordnung zwischen dem Kopfstück und dem Hängestiel nicht gelöst werden kann, jedenfalls nicht ohne den Halter deckenseitig vorher zu lösen, um dann einen Eingriff von oben in die Aufnahme des Kopfstückes zu halten, um die Haltelaschen aus den Durchbrechungen herauszudrücken. Dieses ist mitunter gewünscht.

Aus WO 2018/109420 A1 ist eine weitere Befestigungsanordnung der vorstehenden Art bekannt. Bei dieser Befestigungsanordnung ist in das im Querschnitt U-förmig ausgelegte Kopfstück ein zusätzliches Verriegelungselement eingesetzt. Dieses ist mit einer gewissen Neigung zur Einschieberichtung eines Hängestiels gegenüber den Seitenwangen des Kopfstückes verschiebbar. Beim Einschieben eines Hängestiels zwischen die Seitenwangen wird das Verriegelungselement, welches an seiner zu dem Hängestiel weisenden Seite über ausgestellte Haltelaschen verfügt, seitlich von dem Hängestiel etwas wegbewegt, damit die Haltelaschen an der Außenseite des Endabschnittes des Hängestiels vorbeibewegt werden können. Ist der Endabschnitt des Hängestiels in die Stielaufnahme des Kopfstückes hinreichend weit eingeschoben und fluchten die Haltelaschen mit den Öffnungen der Lochrastung des Hängestiels, greifen diese in diese Öffnungen ein. Je größer das am Hängestiel befindliche Gewicht ist, desto sicherer ist die Verriegelung zwischen dem Verriegelungselement und damit dem Kopfstück und dem Hängestiel. Allerdings kann es bei unbelastetem Hängestiel vorkommen, dass dieser im Zuge einer Montage weiterer Kabeltragkomponenten an den Hängestiel oder auch unabhängig hiervon unbeabsichtigt in Richtung zu dem Kopfstück verschoben wird, was sodann zur Folge hat, dass die vorgesehene Verriegelung des Hängestiels an dem Kopfstück aufgehoben oder zumindest beeinträchtigt wird.

Ausgehend von dem vorstehend beschriebenen Stand der Technik liegt der Erfindung daher die Aufgabe zugrunde, einen eingangs genannten Halter für eine zum Stand der Technik beschriebene Befestigungsanordnung vorzuschlagen, mit der die vorstehend zu dem gewürdigten Stand der Technik angesprochenen Nachteile überwunden sind.

Gelöst wird diese Aufgabe erfindungsgemäß durch einen Halter mit einem daran angeschlossenen, als Positivstruktur ausgeführten und von dem Halter abragenden Anschlussadapter, wobei der Anschlussadapter als Profil eine Vorderwand, zwei seitlich daran angeformte Seitenwände und wenigstens ein der Vorderwand gegenüberliegendes, an dem an einem Stützwiderlager einer Adapteraufnahme eines an den Anschlussadapter anzuschließenden Anschlussabschnittes einer Kabeltragkomponente abstützbares Stützelement aufweist und über ein Riegelglied verfügt, das die Vorderwand des Anschlussadapters durchgreift und mit einem Riegel in die Riegelfalle der Adapteraufnahme eingreift, welches Riegelglied gegen die Rückstellkraft zumindest eines Federelementes zum Ineingriffstellen seines Riegels mit der Riegelfalle der Adapteraufnahme verstellbar ist.

Bei diesem Halter und ebenso bei der einen solchen Halter umfassenden Befestigungsanordnung ist, soweit bekannt, erstmals ein Konzept verwirklicht, bei dem der Halter einen als Positivstruktur ausgeführten Anschlussadapter umfasst. Dementsprechend verfügt die an den Halter anzuschließende Kabeltragkomponente über einen durch eine entsprechende Profilierung gebildeten Anschlussabschnitt mit einer Adapteraufnahme, die zum Erstellen der Befestigungsanordnung mit dem halterseitigen An-schlussadapter in Eingriff gestellt wird. Vorteilhaft bei einer solchen Auslegung der Befestigungsanordnung ist, dass für die Verriegelung des Anschlussadapters mit der Kabeltragkomponente der Anschlussadapter ein Riegelglied aufweisen kann, welches mit seinem Riegel in eine entsprechende, als Riegelfalle dienende Durchbrechung des Anschlussabschnittes der Kabeltragkomponente ein- oder durchgreift und dennoch von außen zugänglich ist. Der Riegel kann somit ohne Weiteres aus der Riegelfalle herausgedrückt und damit die Befestigungsanordnung geöst werden. Der Anschlussadapter dieser Befestigungsanordnung verfügt daher über ein solches Riegelglied, welches gegen die Rückstellkraft zumindest eines Federelementes in radialer Richtung verstellbar ist. Das Vorsehen eines eigenständigen Riegelgliedes mit einem in eine Riegelfalle der an den Anschlussadapter angeschlossenen oder daran anzuschließenden Kabeltragkomponente eingreifenden Riegel hat zum Vorteil, dass dieses unabhängig von der Materialwahl sowie der Materialdimensionierung des Hängestiels und auch der übrigen Bestandteile des Anschlussadapters oder des Halters im Hinblick auf die aufzunehmende Traglast entsprechend ausgelegt werden kann. Ein solches Riegelglied kann beispielsweise ein Bolzen sein, dessen Durchmesser einem Vielfachen der Materialstärke des typischerweise als Stanzbiegeteil ausgeführten Anschlussadapters entspricht. Eine typische Materialstärke für den als Profilstück ausgeführten Anschlussadapter liegt zwischen 2 und 3 mm. Der Durchmesser des Riegels bzw. seines Riegelgliedes kann demgegenüber 12 mm und mehr betragen. Typischerweise entspricht der Durchmesser des Riegels des Riegelgliedes der lichten Weite der Durchbrechungen der Lochrastung des an den Anschlussadapter anzuschließenden Anschlussabschnittes einer Kabeltragkomponente. Entsprechend hoch sind auch bei Einsatz nur eines einzigen Riegelgliedes die Lasten, die von dem an den Halter angeschlossenen Anschlussadapter aufgenommen werden können. Das Vorsehen des Anschlussadapters als Positivstruktur wird bei dieser Befestigungsanordnung genutzt, um diesen mit mehreren, eine Adapterkammer einfassenden Wänden auszulegen, typischerweise als Mehrkantprofil. Hierdurch wird nicht nur die Steifigkeit, insbesondere auch in Bezug auf darauf einwirkende Torsionsbeanspruchungen verbessert, sondern zugleich eine Kammer geschaffen, in die das Riegelglied hinein verstellbar ist und in der das oder die auf das Riegelglied wirkenden Federelemente angeordnet sind. Der Anschlussadapter umfasst eine Vorderwand, zwei seitlich daran angeformte Seitenwände und einen der Vorderwand gegenüberliegenden Rücken. In einem für höhere Lastbeanspruchungen vorgesehenen Ausführungsbeispiel verbindet der Rücken die beiden Seitenwände an ihrer der Vorderwand gegenüberliegenden Seite. Allerdings ist es auch möglich, den Rücken als ein an zumindest einer Seitenwand an ihrer der Vorderwand gegenüberliegenden Seite abgekantetes Rückenteil auszubilden. Wenn zwei derartige Rückenteile vorgesehen sind, also an jeder Seite ein abgekantetes Rückenteil angeformt ist, brauchen die Rückenteile sich mit ihren Stößen nicht zu kontaktieren.

Das Vorsehen eines als Positivstruktur ausgeführten Anschlussadapters hat ferner zum Vorteil, dass der bezüglich der Längsachse des Anschlussadapters dem Riegel gegenüberliegende Rücken als Stützelement an einer Innenwand oder einem Innenwandteil der Adapteraufnahme des Anschlussabschnittes der Kabeltragkomponente abgestützt werden kann. Dieses ist bei einem bevorzugten Ausführungsbeispiel entsprechend umgesetzt. Diese Abstützung erfolgt an einem Innenwandabschnitt, und zwar einer solchen bzw. einem solchen, der der Vorderwand und damit dem Riegel gegenüberliegt. Greift der Riegel des Riegelgliedes in die Riegelfalle des Anschlussabschnittes der Kabeltragkomponente ein oder durchgreift er diese, was in einem bevorzugten Ausführungsbeispiel der Fall ist, ist die Kabeltragkomponente einseitig an dem Anschlussadapter aufgehängt. Das sich einstellende Kippmoment wird durch die vorbeschriebene Abstützanordnung aufgefangen und in das der Vorderwand des Anschlussadapters gegenüberliegende Stützwiderlager eingeleitet, wodurch ein besonders sicherer, dauerhafter und von der Tragkraft her hoch belastbarer Anschluss bereitgestellt ist. Letzteres resultiert aus dem Umstand, dass die in den Anschlussadapter eingeleitete Gewichtskraft nicht nur über das Riegelglied, sondern auch über sein Stützelement eingeleitet wird, wodurch in geschickter Weise eine zweiseitige Aufhängung der Kabeltragkomponente bereitgestellt ist.

Durch Vorsehen zumindest eines auf das Riegelglied wirkenden Federelementes, gegen welches das Riegelglied verstellbar ist, kann unabhängig von der Materialbeschaffenheit des Anschlussadapters die Rückstellkraft, den Anforderungen entsprechend, eingerichtet werden. Insbesondere erlaubt das Vorsehen eines Federelementes das Aufbringen einer elastischen Rückstellkraft über eine größere Bewegungsstrecke des Riegelgliedes ebenso wie das Vorsehen eines oder mehrerer Federelemente, durch die auch höhere, auf das Riegelglied wirkende Kräfte bereitgestellt werden können. Dieses ist für die Bereitstellung einer sicheren Befestigungsanordnung sinnvoll, vor allem auch dann, wenn diese in einer Umgebung mit Vibrationen zum Einsatz kommt.

Der Anschlussabschnitt der an den Anschlussadapter anzuschließenden Kabeltragkomponente ist komplementär zu dem Anschlussadapter als Negativstruktur ausgeführt. Diese Negativstruktur ist durch eine Vorderwand, zwei seitlich daran angeformte Seitenwände und ein zumindest eine Seitenwand der Vorderwand gegenüberliegendes Stützwiderlager bereitgestellt. Insofern kann die Adapteraufnahme im Querschnitt C-förmig ausgelegt sein, wobei in einem bevorzugten Ausführungsbeispiel die Seitenwände zusätzlich über eine in Richtung zur Vorderwand gerichtete Rücckantung aufweisen. In gleicher Weise ist es möglich, dass der Anschlussabschnitt der Kabeltragkomponente ein geschlossenes Profil ist. In vielen Fällen wird sich die Profilierung der Kabeltragkomponente nicht lediglich auf den Anschlussabschnitt beschränken. Vielmehr wird diese Profilierung sich über die gesamte Länge der Kabeltragkomponente erstrecken. Dann kann das jeweils benötigte Kabeltragkomponentenstück ohne weiteres von einem längeren Stück abgelängt werden. Zweckmäßig ist in einem solchen Fall, wenn die Kabeltragkomponente Markierungen, beispielsweise Einprägungen oder Farbmarkierungen aufweist, an denen zur Bereitstellung einer hinreichenden Länge des Anschlussabschnittes ein Kabeltragkomponentenstück von einer längeren Kabeltragkomponente abgelängt werden kann.

Vorteilhaft bei einer solchen Befestigungsanordnung ist zudem, dass die an den Halter anzuschließende Kabeltragkomponente mit ihrer Stirnfläche letztendlich bis an den eigentlichen Halter, also beispielsweise eine Kopfplatte, herangeführt werden kann. Damit kann die an den Halter angeschlossene Kabeltragkomponente auch über ihre den Halter kontaktierende Stirnfläche an diesem abgestützt sein.

Montiert werden kann bei dieser Befestigungsanordnung die Kabeltragkomponente an dem Halter mit seinem Anschlussadapter je nach Auslegung durch translatorisches Aufschieben des Anschlussabschnittes der Kabeltragkomponente auf den Anschlussadapter, bei welchem Aufschieben das Riegelglied soweit in die Adapterkammer eingeschoben, dass die Innenseite der Vorderwand des Anschlussabschnittes der Kabeltragkomponente an der Stirnseite des Riegels vorbeigeführt werden kann, und, wenn mit einer Durchbrechung in der Vorderwand des Anschlussabschnittes fluchtend, der Riegel in diese einspringt. Auch ist es bei dieser Befestigungsanordnung möglich, die Kabeltragkomponente mit ihrem Anschlussabschnitt durch eine Einschwenkbewegung mit dem Anschlussadapter in Eingriff zu stellen. Unter Ausnutzung der Hebelwirkung infolge der Länge der Kabeltragkomponente können dann auch besonders hohe, auf das Riegelglied wirkende Rückstellkräfte überwunden werden. Bei einer Auslegung des Anschlussabschnittes als nicht geschlossene Profilierung kann diese Hebelwirkung auch genutzt werden, um den Anschlussabschnitt der Kabeltragkomponente auf einen mit einem gewissen Übermaß gefertigten Anschlussadapter aufzupressen. Eine solche Verbindung ist nicht nur dauerhaft, sondern vor allem spielfrei. Letzteres gilt auch für den Fall, dass der Anschlussabschnitt der Kabeltragkomponente als geschlossenes Profil ausgeführt ist, jedoch der Anschlussadapter umfänglich nicht geschlossen ist.

Das Riegelglied ist vorzugsweise über das zumindest eine Federelement an den Anschlussadapter angeschlossen. Dann ist beispielsweise die dem Riegel gegenüberliegende Stirnseite des Riegelgliedes mit dem Federelement gefügt. Dies hat zum Vorteil, dass dann ein eigener formschlüssiger Anschluss des Riegelgliedes durch entsprechende Konturierung an den Anschlussadapter nicht erforderlich ist. Als Riegelglied kann beispielsweise ein mit zylindrischer Mantelfläche ausgeführter Bolzen vorgesehen sein. Dieser kann, braucht jedoch keinen Kopf aufzuweisen, durch den eine Verstellung des Riegelgliedes in Richtung nach außen hin begrenzt ist. Im letzteren Fall ist die Stirnseite des Riegelgliedes an das Federelement angeschlossen, sodass durch das Federelement selbst der diesbezügliche Verstellbetrag des Riegelgliedes begrenzt ist. Gemäß einem bevorzugten Ausführungsbeispiel ist als Federelement eine Druckfeder, insbesondere eine zweischenklige Druckfeder vorgesehen, die in ihrem mittleren Abschnitt auf das Riegelglied wirkt bzw. in welchem mittleren Abschnitt das Riegelglied an die Druckfeder angeschlossen ist. Die Schenkel einer solchen Druckfeder dienen nicht nur zur Bereitstellung der erforderlichen Federkraft, sondern auch dem Zweck, die Druckfeder an der Vorderwand des Anschlussadapters zu halten. Gemäß einem Ausführungsbeispiel durchgreifen die bezüglich der übrigen Schenkelabschnitte abgewinkelten Endabschnitte jeweils eine in die Vorderwand des Anschlussadapters eingebrachte Schenkeldurchbrechung. Diese befinden sich vorzugsweise benachbart zu der Öffnung, durch die das Riegelglied greift. Besonders zweckmäßig ist die Ausgestaltung einer solchen Druckfeder als Flachbandfeder, auch da bei der dann die die Schenkeldurchbrechung durchgreifenden Endabschnitte der Schenkel der Druckfeder nur eine geringe Materialstärke aufweisen und hierdurch nicht notwendigerweise in die Außenseite der Vorderwand Schenkelendvertiefungen eingebracht werden müssen. Vorteilhaft bei dem Einsatz zumindest eines auf das Riegelglied wirkenden Federelementes ist auch, dass infolge der Federkraft sich das Einsprengen des Riegels in eine Durchbrechung des Anschlussabschnittes der anzuschließenden Kabeltragkomponente durch ein akustisch deutlich vernehmbares "Klack"-geräusch bemerkbar macht. Hierdurch erhält ein Monteur eine konkrete akustische Rückmeldung, dass die Befestigungsanordnung bestimmungsgemäß erstellt worden ist.

Zur verbesserten Abstützung der an den Anschlussadapter angeschlossenen Kabeltragkomponente zum Auffangen des Kippmomentes und Einleiten desselben in den Anschlussadapter befindet sich das zumindest eine Stützelement des Anschlussadapters in einem größeren Abstand zum Halter als die zum Halter weisende Mantelfläche des in die Riegelfalle der an den Anschlussadapter angeschlossenen Kabeltragkomponente eingreifenden Riegels. Somit befinden sich die Mantelfläche des Riegelgliedes und das zumindest eine Stützelement in Bezug auf die Längserstreckung des Anschlussadapters an unterschiedlichen Positionen.

Der Anschlussadapter weist gemäß einer Ausgestaltung eine rechteckförmige Querschnittsgeometrie auf. Diese ist zumindest von ihrer Bemaßung an die Innengeometrie des Anschlussabschnittes einer daran anzuschließenden Kabeltragkomponente angepasst.

Das zumindest eine Stützelement, bei dem es sich, wie bereits vorstehend erwähnt, um die von der Vorderwand wegweisenden Stirnflächen der Seitenwände, ein an eine Seitenwand angeformtes Rückenteil oder einen die Seitenwände verbindenden Rücken handeln kann, sind zur Verbesserung einer Krafteinleitung an zumindest einer der zueinander weisenden Seiten zwischen Stützelement und der entsprechenden Innenseite des Anschlussabschnittes Verklammerungsstrukturen vorgesehen, die in der Abstützanordnung miteinander in Eingriff gestellt sind. Hierbei kann es sich um jeweils eine Rillierung handeln, wobei die Längsachsen der Positiv- und Negativstrukturen quer zur Längserstreckung des Anschlussadapters verlaufen. Durch diese Maßnahme ist zwischen dem Anschlussadapter und der daran angeschlossenen Kabeltragkomponente an der der Vorderwand gegenüberliegenden Stützwiderlager ebenfalls in Kraftbeanspruchungsrichtung bei einer hängenden Verbindung der Befestigungsanordnung an beiden Seiten gegeben.

Um eine an den Halter bzw. den Anschlussadapter anzuschließende Kabeltragkomponente durch Einschwenken mit dem Anschlussadapter in Eingriff stellen zu können, ist in einem bevorzugten Ausführungsbeispiel vorgesehen, dass die Seitenwände des Anschlussadapters in der Flucht des Riegelgliedes eine geringere Breitenerstreckung aufweisen als in der Position, an dem das zumindest eine Stützelement angeordnet ist. Dieses gibt Raum, den Anschlussabschnitt der anzuschließenden Kabeltragkomponente über das zumindest eine Stützelement hinweg zu schieben. Typischerweise ist auch der diagonal hierzu liegende Vorderwand- und Seitenwandabschluss ebenfalls ausgeklinkt. Vorteilhaft ist eine solche Ausgestaltung der Befestigungsanordnung auch dann, wenn das zumindest eine Stützelement und/oder das Stützwiderlager Verklammerungsstrukturen tragen, da diese dann kaum in Richtung der Längserstreckung des Anschlussadapters gegeneinander verstellt werden können.

Der Anschlussadapter ist typischerweise an die übrigen Bestandteile des Halters, beispielsweise eine Kopfplatte, angeschweißt oder beispielsweise als Stanzbiegeteil zusammen mit diesem geformt.

Bei dem Halter handelt es sich typischerweise ebenfalls um eine Kabeltragkomponente, beispielsweise um eine Kopfplatte oder ein Kopfstück, festzulegen an der Unterseite einer Decke, oder um einen Hängestiel. Die daran anzuschließende Kabeltragkomponente ist bei der Konzeption des Halters als Kopfplatte ein Hängestiel oder für den Fall, dass es sich bei dem Halter um einen Hängestiel handelt, ein Ausleger.

Die Mantelfläche des Riegels des Riegelgliedes ist an ihrer zu dem Halter weisenden Seite typischerweise komplementär zu der in diese Richtung weisenden Kontur der Riegelfalle des Anschlussabschnittes der an den Halter anzuschließenden bzw. angeschlossenen Kabeltragkomponente ausgeführt. In vielen Fällen verfügen derartige Kabeltragkomponenten über ein vorgegebenes Lochraster, beispielsweise in Form von Langlöchern, deren Langachse in Richtung der Längserstreckung der Kabeltragkomponente weist. In einem solchen Fall ist die die Mantelfläche des Riegelgliedes kontaktierende Kontur gerundet, weshalb in einem solchen Fall die Mantelfläche des Riegelgliedes zumindest an ihrer zu dem Halter weisenden Seite komplementär gerundet ist. Selbstverständlich sind auch andere Lochrastergeometrien möglich. Soll beispielsweise ein Hängestiel als Kabeltragkomponente höhere Lasten tragen können, kann zur Reduzierung einer auf den gerundeten Lochrandbereich einwirkenden Kerbwirkung der Scheitel in einem Abschnitt ungekrümmt ausgeführt sein. Bei einer solchen Ausgestaltung hat dann die zu dem Halter weisende Mantelfläche des Regelgliedes eine komplementär ausgeführte Mantelgeometrie.

Der Riegel des Riegelgliedes durchgreift vorzugsweise die Riegelfalle des Anschlussabschnittes der Kabeltragkomponente. Dieses bedeutet, dass in der Befestigungsanordnung der Riegel mit einem Abschnitt aus der Riegelfalle herausragt. Aufgrund der außenseitigen Anordnung des Anschlussabschnittes ist dieser herausragende Abschnitt sichtbar. Dieses wird gemäß einem Ausführungsbeispiel genutzt, um den aus der Riegelfalle herausragenden Abschnitt des Riegels farblich zu kennzeichnen, um auf diese Weise visuell deutlich kenntlich zu machen, dass das Riegelglied bestimmungsgemäß die Riegelfalle hinreichend weit durchgriffen hat. Insofern erhält ein Monteur bei einer solchen Ausgestaltung der Befestigungsanordnung zwei Rückmeldungen - eine akustische, wie vorstehend angesprochen, und zum anderen eine visuelle, wenn die Befestigungsanordnung bestimmungsgemäß erstellt worden ist.

Die in die Riegelfalle eingreifende oder diese vorzugsweise durchgreifende Stirnseite des Riegels kann mit einer Werkzeugangriffskontur, beispielsweise einer zentrischen Vertiefung ausgeführt sein, um daran ein Werkzeug, beispielsweise einen Schraubendreher zum Eindrücken des Riegelgliedes und somit zum Lösen der Befestigungsanordnung ansetzen zu können.

Die in die Riegelfalle eingreifende oder diese durchgreifende Stirnseite des Riegels verfügt typischerweise über zumindest eine Stellschräge. Diese befindet sich an der von übrigen Bestandteilen des Halters wegweisenden Seite der Stirnfläche und ist typischerweise als Fase an der dem Halter gegenüberliegenden Ende zwischen Stirnseite und Mantelfläche ausgeführt. An diese wird bei einer Montage die anzuschließende Kabeltragkomponente herangeführt, wodurch das Riegelglied gegen die Kraft des zumindest einen Federelementes in den Anschlussadapter eingedrückt wird, sodass für die Verstellung des Riegelgliedes zur Montage der Kabeltragkomponente keine gesonderte Betätigung des Riegelgliedes erforderlich ist. Auch an der gegenüberliegenden, zum Halter weisenden Mantelfläche kann eine Fase als Stellschräge vorgesehen sein, diese ist typischerweise sehr viel kleiner bemessen als die vorstehend angesprochene Stellschräge. Diese dient einem erleichterten Lösen der Befestigungsanordnung.

Auch wenn vorstehend die Befestigungsanordnung mit ihrem Anschlussadapter mit lediglich einem Riegelglied beschrieben ist, kann ein solcher auch mehrere, beispielsweise zwei Riegelglieder aufweisen. Gemäß einem Ausführungsbeispiel sind diese übereinanderliegend, sodass jedes Riegelglied mit seinem Riegel jeweils eine Riegelfalle der daran anzuschließenden Kabeltragkomponente durchgreift.

Ergänzend kann der Anschlussadapter an seinen beiden Seitenwänden mit zusätzlichen Rastnasen ausgerüstet sein, die jeweils in eine Durchbrechung des Lochrasters der Seitenwände des Anschlussabschnittes der Kabeltragkomponente eingreifen. Bei einer solchen Ausgestaltung ist bevorzugt, wenn der Anschlussabschnitt an der Seite seines Stützwiderlagers offen ist, damit zum Einbringen derartiger Rastnasen die Spreizelastizität der Seitenwände des Anschlussabschnittes der Kabeltragkomponente genutzt werden kann.

Nachfolgend ist die Erfindung anhand eines Ausführungsbeispiels unter Bezugnahme auf die beigefügten Figuren beschrieben. Es zeigen:
- **Fig. 1:**: Eine perspektivische Ansicht einer Befestigungsanordnung, umfassend einen erfindungsgemäßen Halter und eine Kabeltragkomponente nach Art einer Explosionsdarstellung,
- **Fig. 2:**: eine perspektivische Darstellung des Halters der Befestigungsanordnung der Figur 1 aus einer ersten Perspektive,
- **Fig. 3:**: eine perspektivische Darstellung des Halters der Befestigungsanordnung der Figur 1 aus einer anderen Perspektive,
- **Fig. 4a** - **4d:**: eine Figurenfolge zum Darstellen der Montagebewegung zum Anschließen der Kabeltragkomponente an den Halter zum Erstellen der Befestigungsanordnung der Figur 1,
- **Fig. 5:**: eine Frontseitenansicht der Befestigungsanordnung der Figur 1,
- **Fig. 6:**: eine vergrößerte Schnittdarstellung durch den oberen Abschluss der Befestigungsanordnung der Figur 5 entlang der Linie A - A und
- **Fig. 7:**: einen Querschnitt durch die Befestigungsanordnung der Figur 5 entlang der Schnittlinie B - B.

Eine Befestigungsanordnung 1 umfasst einen Halter 2 und einen Hängestiel 3 als an den Halter 2 angeschlossene Kabeltragkomponente. Der Halter 2 des dargestellten Ausführungsbeispiels verfügt über eine Kopfplatte 4, mit der der Halter 2 an der Unterseite einer Decke befestigbar ist. Die Kopfplatte 4 verfügt zu diesem Zweck über entsprechende Befestigungsdurchbrechungen zum Durchführen jeweils eines Befestigers. An die Kopfplatte 4 ist ein Anschlussadapter 5 angeschlossen, wobei der Anschluss des Anschlussadapters 5 an die Kopfplatte 4 bei dem dargestellten Ausführungsbeispiel durch eine Fügeverbindung (Schweißverbindung) bereitgestellt ist. Der Anschlussadapter 5 ragt von der Kopfplatte 4 unterseitig ab und bildet in Bezug auf die Ebene der Kopfplatte 4 eine Positivstruktur. Teil des Anschlussadapters 5 ist ein Riegelglied 6, das an einer als Bandfeder ausgeführten, zweischenkligen Druckfeder 7 befestigt ist. Die Druckfeder 7 verfügt über einen mittleren Abschnitt 8, der bei dem dargestellten Ausführungsbeispiel eine etwas größere Breite aufweist als die daran angeformten Schenkel 9, 9.1. Die Endabschnitte 10, 10.1 der Schenkel 9, 9.1 sind nach außen voneinander wegweisend abgekantet. Der übrige Teil des Anschlussadapters 5 ist bei dem dargestellten Ausführungsbeispiel ein bearbeitetes Vierkantprofilstück A mit gerundeten Kanten. Dieses Profilstück A verfügt über eine Vorderwand 11, zwei daran angeschlossene Seitenwände 12, 12.1 und bei dem dargestellten Ausführungsbeispiel über einen die beiden Seitenwände 12, 12.1 an ihrer der Vorderwand 11 gegenüberliegenden Seite verbindenden Rücken 13. In die Vorderwand 11 ist eine Durchbrechung 14 für den Durchgriff des Riegelgliedes 6 eingebracht. Mit Abstand zu der Durchbrechung 14 sind in die Vorderwand 11, einander in Richtung der Längserstreckung des Anschlussadapters 5 einander bezüglich der Durchbrechung 14 gegenüberliegend, zwei Schenkeldurchbrechungen 15, 15.1 eingebracht. Die Schenkeldurchbrechungen 15, 15.1 dienen dem Anschluss der Druckfeder 7 mit dem Riegelglied 6 an die Vorderwand 11. Die Vorderwand 11, die Seitenwände 12, 12.1 und der Rücken 13 fassen eine Adapterkammer 16 ein, in der sich die übrigen Abschnitte der Druckfeder 7 und ein Teil des Riegelgliedes 6 befinden.

Das Riegelglied 6 des dargestellten Ausführungsbeispiels ist als Bolzen mit zylindrischer Mantelfläche ausgeführt. Durchaus möglich ist auch eine Ausgestaltung des Riegelgliedes mit einer zu seiner freien Stirnfläche hin geringen Konizität von beispielsweise 1° bis 2°.

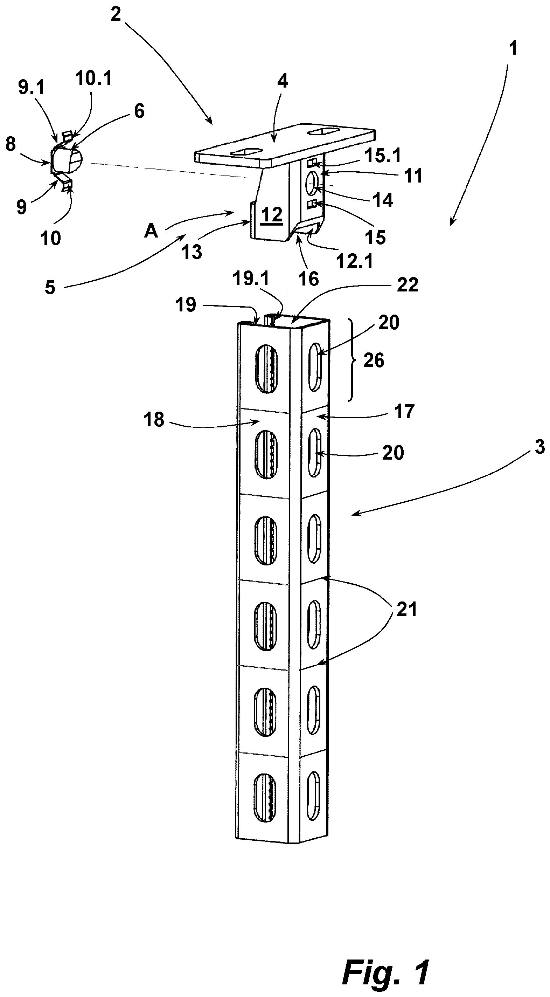

Der als Kabeltragkomponente bei dem dargestellten Ausführungsbeispiel dienende Hängestiel 3 ist ein im Querschnitt C-förmig profiliertes Profil mit Rückkantungen. Somit umfasst der Hängestiel 3 eine Vorderwand 17, zwei daran angeformte Seitenwände 18, 18.1 sowie zwei durch die C-förmige Profilierung mit Rückkantung durch die rückgekanteten Stirnflächen 19, 19.1 gebildete Stützwiderlager. In die Vorderwand 17 und die Seitenwände 18, 18.1 ist ein Lochraster eingebracht. Die Durchbrechungen 20 in der Vorderwand 17 sind bei dem Hängestiel 3 langlochartig ausgeführt, wobei die in Längserstreckung des Hängestiels 3 weisenden Enden gekrümmt sind. Die Durchbrechungen in den beiden Seitenwänden 18, 18.1 weisen dieselbe Geometrie auf. Die in die Vorderwand 17 eingebrachten Durchbrechungen 20 dienen als Riegelfalle zur Aufnahme des als Riegel dienenden vorderen Abschnittes des Riegelgliedes 6. Zwischen zwei in Richtung der Längserstreckung des Hängestiels 3 benachbart angeordneten Durchbrechungen 20 ist eine Markierung 21, die bei dem dargestellten Ausführungsbeispiel durch eine Prägung geringer Tiefe bereitgestellt ist, vorgesehen. Die Markierungen 21 dienen dem Zweck eines exakten Ablängens des Hängestiels für die Befestigungsanordnung 1, damit die Stirnfläche des Anschlussabschnittes 26 an der Unterseite der Kopfplatte 4 zur Anlage gelangt. Der in Figur 1 erkennbare oberste Abschnitt des Hängestiels 3 dient als Anschlussabschnitt zum Anschließen des Hängestiels 3 an den Halter 2. Eingefasst ist durch die Vorderwand 17, die daran angeformten Seitenwände 18, 18.1 und die übrige Profilierung des Hängestiels 3 eine Adapteraufnahme 22. Diese stellt in Bezug auf den Anschlussadapter 5 eine Negativstruktur dar. Beide Strukturen 5, 22 sind maßlich aufeinander abgestimmt, sodass diese miteinander in Eingriff gestellt werden können.

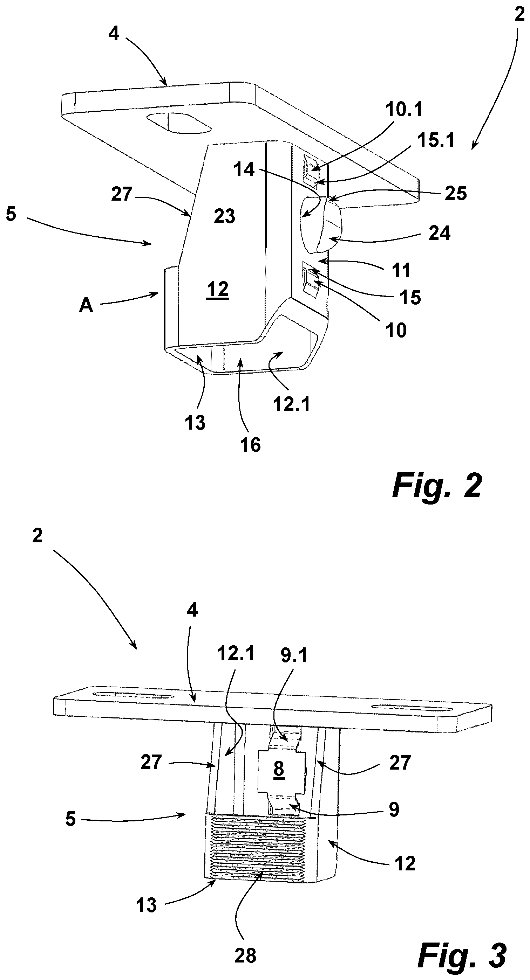

Figur 2 zeigt in einer perspektivischen Ansicht den Halter 2 in seiner Benutzungsstellung mit der an der Vorderwand 11 des Profilstückes A montierten, das Riegelglied 6 tragenden Druckfeder 7. Die Endabschnitte 10, 10.1 durchgreifen die Schenkeldurchbrechungen 15, 15.1 und liegen an der Außenseite der Vorderwand 11 an. Aus der Durchbrechung 14 ragt das Riegelglied 6 mit seinem als Riegel 23 dienenden Abschnitt heraus. Gegen die Rückstellkraft der Druckfeder 7 kann das Riegelglied 6 translatorisch in die Adapterkammer 16 hinein verstellt werden. Die von der Druckfeder 7 wegweisende Stirnfläche des Riegelgliedes - das freie Ende des Riegel 23 - ist durch eine untere, von der Kopfplatte 4 weiter entfernte Stellschräge 24 und eine obere, der Kopfplatte 4 nähere Stellschräge 25 strukturiert. Die Stellschrägen 24, 25 verlaufen bezüglich ihrer ebenen Erstreckung quer zur Längserstreckung des Anschlussadapters 5. Die Stellschräge 24 ist länger ausgebildet als die Stellschräge 25. Beide Stellschrägen 24, 25 dienen dem Zweck, bei einer Montage bzw. einer Demontage des Hängestiels 3 als Kabeltragkomponente an den Halter 2 das Riegelglied 6 soweit in die Vorderwand 11 mit dem Anschlussabschnitt des Hängestiels 3 einzudrücken, dass der ungelochte Endabschnitt des Anschlussabschnittes 26 über den Riegel 23 des Riegelgliedes 6 hinweggeführt werden kann, damit dieser im Zuge der weiteren Montage in die oberste Durchbrechung 20 als Riegelfalle der Vorderwand 17 des Anschlussabschnittes 26 des Hängestiels 3 einspringen kann.

Bei dem dargestellten Ausführungsbeispiel ist der Anschlussadapter 5 ausgelegt, dass der Hängestiel 3 mit seinem Anschlussabschnitt 26 (siehe Figur 1) mit dem Anschlussadapter 5 durch Ausführen einer Einschwenkbewegung in Eingriff gestellt werden kann. Zu diesem Zweck sind die Seitenwände 12, 12.1 des Anschlussadapters 5 in der Flucht des Riegelgliedes 6 mit einer geringeren Breitenerstreckung ausgeführt als im Bereich des Rückens 13. Bei dem dargestellten Ausführungsbeispiel ist der von der Vorderwand 11 wegweisende Abschluss der Seitenwände 12, 12.1 geneigt, und zwar mit in Richtung zur Kopfplatte 4 geringer werdenden Breite. Dieser Schrägabschluss der Seitenwände 12, 12.1 ist in den Figuren mit dem Bezugszeichen 27 kenntlich gemacht. Diagonal dem Schrägabschluss 27 gegenüberliegend, ist auch die Vorderwand 11 mit gleichsinniger Neigung ausgeklinkt, wobei sich diese Ausklinkung bis in die Seitenwände 12, 12.1 hineinerstreckt.

Der Rücken 13 ist mit einer Rillierung 28 (siehe Figur 3) ausgerüstet, wobei die Längsachse der Rillierung quer zur Längsachse des Anschlussadapters 5 verläuft.

Diese Rillierung 28 dient als Verklammerungsstruktur, die gegen die Stirnflächen 19, 19.1 der Rückkantung des Anschlussabschnittes 26 des Hängestiels 3 wirkt. Die Stirnflächen 19, 19.1 des Hängestiels 3 sind, wie aus Figur 1 ersichtlich, ebenfalls mit Verklammerungsstrukturen ausgeführt.

In Bezug auf die Längsstreckung des Anschlussadapters 5 befindet sich das Riegelglied 6 mit seinem Riegel 23 an einer der Kopfplatte 4 näheren Position als der Rücken 13 mit seiner Rillierung 28. Dieser Versatz ist in den Figuren 2 und 3 deutlich zu erkennen.

Das Umfangsmaß des Anschlussadapters 5 weist bei dem dargestellten Ausführungsbeispiel ein geringes Übermaß gegenüber der inneren Weite des Anschlussabschnittes 26 des Hängestiels 3 auf. Das Übermaß beträgt wenige Zehntel mm.

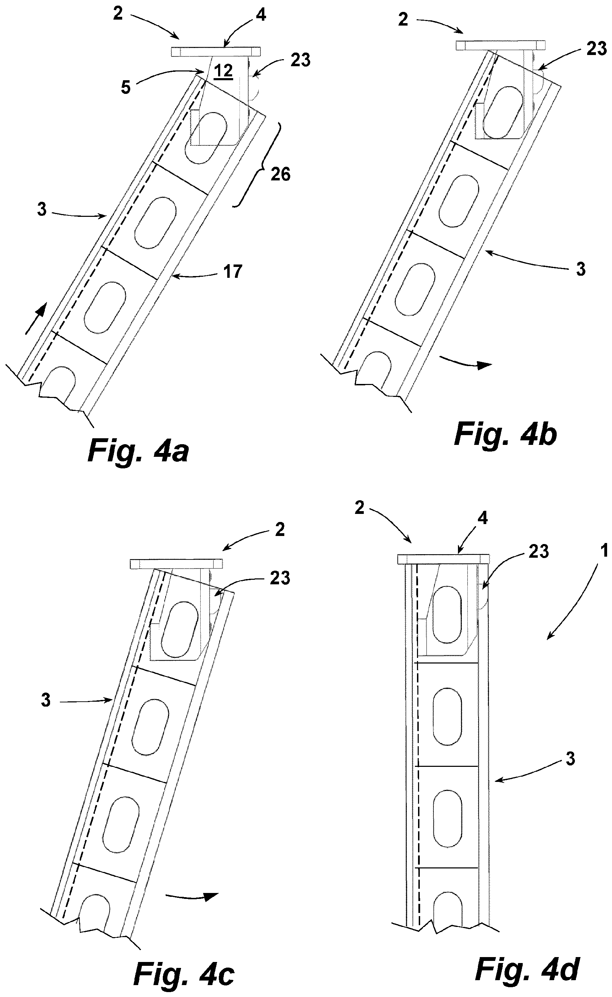

Montiert wird der Hängestiel 3 als Kabeltragkomponente an dem Halter 2 durch Ausführen einer Aufsteck- und Einschwenkbewegung. Dieses ist in der Figurenfolge 4a bis 4d dargestellt. In einem ersten Montageschritt wird der Anschlussabschnitt 26 der Kabeltragkomponente 3 auf den unteren Abschnitt des Anschlussadapters 5 des Halters 2 aufgeschoben, wobei die Innenseite der Vorderwand 17 des Hängestiels 3 an der Ausklinkung der Vorderwand 11 des Anschlussadapters 5 vorbeigeführt wird. Diese Stellung zwischen Hängestiel 3 und Halter 2 ist in Figur 4a wiedergegeben. Anschließend wird unter gleichzeitig weiterem Aufschieben des Hängestiels 3 auf den Anschlussadapter 5 eine Schwenkbewegung des Hängestiels 3 ausgeführt. Diese ist durch einen Pfeil in Figur 4b kenntlich gemacht. Begrenzt wird die Aufschiebebewegung durch einen Kontakt zwischen dem Anschlussabschnitt 26 des Hängestiels 3 mit seiner vorderen Kante der Rücckantung an der Unterseite der Kopfplatte 4 (s. Figur 4b). Im Zuge des weiteren Einschwenkens gelangt die Innenseite der Vorderwand 17 des Anschlussabschnittes 26 an die Stirnfläche des Riegels 23, sodass durch weiteres Ausführen der Einschwenkbewegung das Riegelglied 6 in die Adapterkammer 16 des Anschlussadapters 5 eingedrückt wird. Fluchtet der Riegel 23 mit der obersten Durchbrechung 20 der Vorderwand 17 des Hängestiels 3, springt der Riegel in diese Durchbrechung 20 als Riegelfalle ein, womit dann die Befestigungsanordnung bereitgestellt ist.

Aufgrund der Länge des Hängestiels 3 kann durch die Einschwenkbewegung eine hohe Stellkraft auf das Riegelglied 6 ausgeübt werden, ebenso wie die erforderliche Kraft zum Aufweiten des Anschlussabschnittes 26 des Hängestiels 3, damit der gegenüber der inneren Weite des Anschlussabschnittes 26 mit einem gewissen Übermaß gefertigte Anschlussadapter 5 als Positivstruktur in den Aufnahmeabschnitt 26 eingeführt werden kann.

Dieses gewährleistet einen spielfreien Sitz zwischen dem Anschlussadapter 5 und dem Anschlussabschnitt 26 des Hängestiels 3.

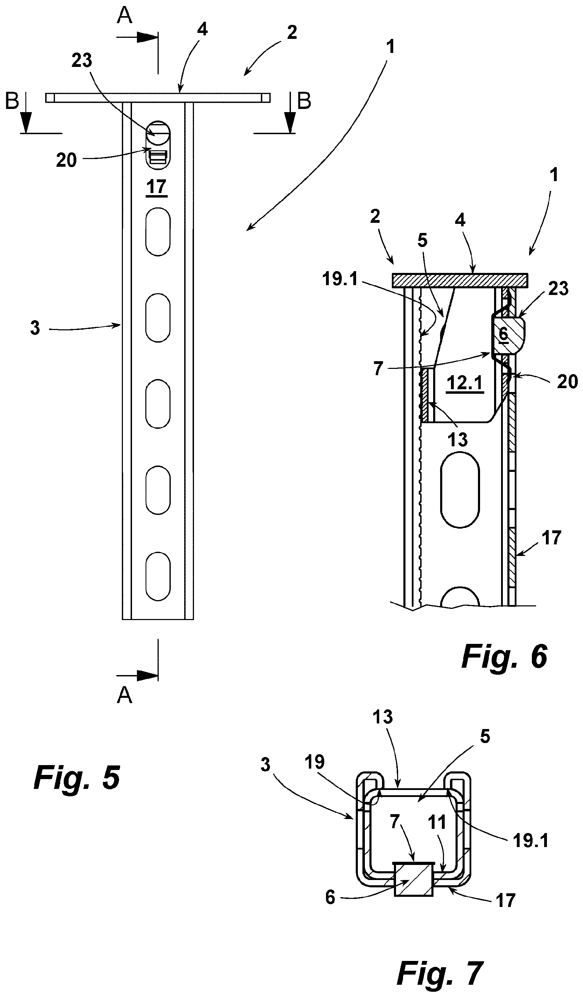

Figur 4d zeigt die Befestigungsanordnung 1, wobei in natura der Riegel 23 die oberste Durchbrechung 20 der Vorderwand 17 durchgreift und mit einem deutlich längeren Abschnitt über der Außenseite der Vorderwand 17 hervorsteht (s. hierzu auch Figur 6). Die freie Stirnseite des Anschlussabschnittes 26 kontaktiert die Unterseite der Kopfplatte 4 in der Befestigungsanordnung 1.

In der Figurenfolge 4a bis 4d ist der Hängestiel 3 transparent dargestellt, um das sukzessive Ineingriffstellen seines Anschlussabschnittes 26 mit dem Anschlussadapter 5 darstellen zu können.

Der Radius der zur Kopfplatte 4 weisenden Mantelfläche des Riegelgliedes 6 ist zumindest in seinem Riegelabschnitt 23 an den Radius des diesbezüglichen Endes der Durchbrechung 20 des Hängestiels 3 angepasst (s. auch Figur 5).

Die Längsschnittdarstellung der Figur 6 der Befestigungsanordnung 1 zeigt den Anschluss des Anschlussabschnittes 26 des Hängestiels 3 an den Halter 2. Die Vorderwand 7 des Hängestiels 3 hängt an dem den Riegel 23 bildenden Abschnitt des Riegelgliedes 6. Aufgrund des in Figur 6 erkennbaren Höhenversatzes zwischen dem Riegelglied 6 bzw. seinem Riegel 23 und dem Rücken 13 wird Letzterer mit seiner Rillierung 28 gegen die ebenfalls mit Verklammerungsstrukturen ausgerüsteten Stirnflächen 19, 19.1 der Rückkantung gedrückt, sodass eine Traglasteinleitung sowohl über die Vorderwand 17 als auch über die Rückkantungen und damit über die Vorderwand 11 und den Rücken 13 in den Anschlussadapter 5 eingekoppelt werden.

Das spielfreie Einpassen des Anschlussadapters 5 in die Adapteraufnahme 22 des Anschlussabschnittes 26 des Hängestiels 3 ist der Querschnittsdarstellung der Figur 7 zu entnehmen.

Die Erfindung ist anhand von Ausführungsbeispielen beschrieben worden. Ohne den Schutzbereich, beschrieben durch die geltenden Ansprüche, zu verlassen, ergeben sich für den Fachmann zahlreiche weitere Ausgestaltungen, den Erfindungsgedanken zu verwirklichen, ohne dass diese im Rahmen dieser Ausführungen näher erläutert werden müssten.

### Bezugszeichenliste

- 1: Befestigungsanordnung
- 2: Halter
- 3: Hängestiel
- 4: Kopfplatte
- 5: Anschlussadapter
- 6: Riegelglied
- 7: Druckfeder
- 8: Abschnitt
- 9, 9.1: Schenkel
- 10, 10.1: Endabschnitt
- 11: Vorderwand
- 12, 12.1: Seitenwand
- 13: Rücken
- 14: Durchbrechung
- 15, 15.1: Schenkeldurchbrechung
- 16: Adapterkammer
- 17: Vorderwand
- 18, 18.1: Seitenwand
- 19, 19.1: Stirnfläche
- 20: Durchbrechung
- 21: Markierung
- 22: Adapteraufnahme
- 23: Riegel
- 24: Stellschräge
- 25: Stellschräge
- 26: Anschlussabschnitt
- 27: Schrägabschluss
- 28: Rillierung
- A: Profilstück

## Patentansprüche

1. Halter mit einem daran angeschlossenen, als Positivstruktur ausgeführten und von dem Halter (2) abragenden Anschlussadapter (5), wobei der Anschlussadapter (5) als Profil eine Vorderwand (11), zwei seitlich daran angeformte Seitenwände (18, 18.1) und wenigstens ein der Vorderwand (11) gegenüberliegendes, an dem an einem Stützwiderlager einer Adapteraufnahme (22) eines an den Anschlussadapter (5) anzuschließenden Anschlussabschnittes (26) einer Kabeltragkomponente abstützbares Stützelement (13) aufweist und über ein Riegelglied (6) verfügt, das die Vorderwand (11) des Anschlussadapters (5) durchgreift und mit einem Riegel (25) in die Riegelfalle der Adapteraufnahme (22) eingreift, welches Riegelglied gegen die Rückstellkraft zumindest eines Federelementes zum Ineingriffstellen seines Riegels (25) mit der Riegelfalle der Adapteraufnahme (22) verstellbar ist.

2. Halter nach Anspruch 1, **dadurch gekennzeichnet, dass** das Riegelglied (6) mittels des Federelementes an dem Anschlussadapter (5) gehalten ist.

3. Halter nach Anspruch 1 oder 2, **dadurch gekennzeichnet, dass** das Federelement eine Druckfeder (7) ist, die mit einem mittleren, zwischen ihren beiden Schenkeln befindlichen Abschnitt (8) gegen das Riegelglied (6) wirkt und die mit ihren Schenkeln an der Vorderwand (11) des Anschlussadapters (5) gehalten ist.

4. Halter nach Anspruch 3, **dadurch gekennzeichnet, dass** benachbart zu der von dem Riegelglied (6) durchgriffenen Öffnung (14) der Vorderwand (11) des Anschlussadapters (5) einander bezüglich der Öffnung gegenüberliegende, von jeweils einem Schenkel der Schenkelfeder durchgriffene Schenkeldurchbrechungen vorhanden sind.

5. Halter nach Anspruch 3 oder 4, **dadurch gekennzeichnet, dass** die Druckfeder (7) als Flachbandfeder ausgeführt ist.

6. Halter nach einem der Ansprüche 1 bis 5, **dadurch gekennzeichnet, dass** das Stützelement (13) des Anschlussadapters (5) durch ein an zumindest einer Seitenwand angeformtes Rückenteil oder durch einen die beiden Seitenwände verbindenden Rücken bereitgestellt ist.

7. Halter nach einem der Ansprüche 1 bis 6, **dadurch gekennzeichnet, dass** der gegen das Stützwiderlager (19, 19.1) eines Anschlussabschnittes (26) einer Kabeltragkomponente bei einer an den Anschlussadapter (5) angeschlossenen Kabeltragkomponente wirkende Abschnitt des Rückens (13) des Anschlussadapters (5) einen größeren Abstand zu dem Halter aufweist als die zu dem Halter weisende Mantelfläche des in die Riegelfalle eines Anschlussabschnittes (26) einer an den Anschlussadapter (5) anzuschließenden Kabeltragkomponente ein- oder durchgreifenden Riegels (23).

8. Halter nach einem der Ansprüche 1 bis 7, **dadurch gekennzeichnet, dass** der Anschlussadapter (5) eine rechteckförmige Querschnittsgeometrie aufweist.

9. Halter nach einem der Ansprüche 1 bis 8, **dadurch gekennzeichnet, dass** die Seitenwände (12, 12.1) des Anschlussadapters (5) an ihrer von der Vorderwand (11) wegweisenden Seite in der Flucht des Riegelgliedes eine geringere, von dem Riegelglied wegweisende Erstreckung als in dem Abschnitt des Rückens (13) aufweisen.

10. Halter nach Anspruch 9, **dadurch gekennzeichnet, dass** der Anschlussadapter (5) rückenseitig eine Ausklinkung mit geneigtem rückwärtigen Schrägabschluss (27) aufweist.

11. Halter nach Anspruch 9 oder 10, **dadurch gekennzeichnet, dass** der Anschlussadapter (5) vorderwandseitig an seinem von dem Halter (2) wegweisenden Abschluss eine sich in die Seitenwände (12, 12.1) erstreckende Ausklinkung aufweist.

12. Befestigungsanordnung mit einem Halter (2) nach einem der Ansprüche 1 bis 11 und mit einer zumindest in einem Anschlussabschnitt (26) unter Ausbildung einer als Negativstruktur ausgeführten, mit dem Anschlussadapter (5) in Eingriff gestellten Adapteraufnahme (22) profilierten Kabeltragkomponente (3), wobei die Adapteraufnahme (22) durch eine zumindest eine Durchbrechung (20) als Riegelfalle aufweisende Vorderwand (11), zwei daran angeformte Seitenwände (18, 18.1) und ein an zumindest eine Seitenwand (18, 18.1) angeformtes, der Vorderwand (17) gegenüberliegende Stützwiderlager (19, 19.1) eingefasst ist und wobei der Anschlussadapter (5) als Profil eine Vorderwand (11), zwei Seitenwände (12, 12.1) und wenigstens ein der Vorderwand (11) gegenüberliegendes, an dem Stützwiderlager (19, 19.1) der Adapteraufnahme (22) abgestütztes-Stützelement (13) aufweist und über ein Riegelglied (6) verfügt, das die Vorderwand (11) des Anschlussadapters (5) durchgreift und mit einem Riegel (25) in die Riegelfalle der Adapteraufnahme (22) eingreift, welches Riegelglied (6) gegen die Rückstellkraft zumindest eines Federelementes (7) zum Ineingriffstellen seines Riegels (23) mit der Riegelfalle der Adapteraufnahme (22) verstellbar ist.

13. Befestigungsanordnung nach Anspruch 12, **dadurch gekennzeichnet, dass** der Rücken (13) und das Stützwiderlager (19, 19.1) an ihren zueinander weisenden Seiten mit ihrer Längsachse quer zur Längserstreckung des Anschlussadapters (5) verlaufende, miteinander in Eingriff stellbare Verklammerungsstrukturen tragen.

14. Befestigungsanordnung nach Anspruch 12 oder 13, **dadurch gekennzeichnet, dass** der Anschlussadapter (5) ein gewisses Übermaß hinsichtlich des Abstandes der Außenseite seiner Vorderwand (11) von der Außenseite seines Rückens (13) in Bezug auf die diesbezügliche Weite der Adapteraufnahme (22) zwischen ihrer Vorderwand (17) und dem Stützwiderlager (19, 19.1) aufweist.

15. Befestigungsanordnung nach einem der Ansprüche 12 bis 14, **dadurch gekennzeichnet, dass** es sich bei dem Halter ebenfalls um eine Kabeltragkomponente, und zwar um eine Kopfplatte (4) oder einen Hängestiel und bei der daran angeschlossenen Kabeltragkomponente entsprechend um einen Hängestiel (3) oder einen Ausleger handelt.
